(19) Europäisches Patentamt
European Patent Office
Office européen des brevets

(11) **EP 4 138 250 B1**

(12) **EUROPEAN PATENT SPECIFICATION**

(45) Date of publication and mention
of the grant of the patent:
**03.09.2025 Bulletin 2025/36**

(21) Application number: **21788663.9**

(22) Date of filing: **14.04.2021**

(51) International Patent Classification (IPC):
*H02J 3/36* (2006.01)  *H02J 3/38* (2006.01)
*H02M 1/36* (2007.01)  *H02M 7/483* (2007.01)

(52) Cooperative Patent Classification (CPC):
**H02J 3/36; H02J 3/381; H02M 1/36; H02M 7/4835;**
H02J 3/001; H02J 2300/28; H02M 7/4833;
Y02E 60/60

(86) International application number:
**PCT/ES2021/070242**

(87) International publication number:
**WO 2021/209664 (21.10.2021 Gazette 2021/42)**

(54) **METHOD FOR POWERING UP MMC CONVERTERS AND AN HVDC LINK IN ORDER TO START-UP ELECTRIC POWER PLANTS**

VERFAHREN ZUM HOCHFAHREN VON MMC-WANDLERN UND HVDC-VERBINDUNG ZUM HOCHFAHREN VON ELEKTRISCHEN KRAFTWERKEN

PROCÉDÉ D'ÉNERGISATION DE CONVERTISSEURS MMC ET LIAISON CONTINUE CCHT POUR LE DÉMARRAGE DE CENTRALES DE PRODUCTION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.04.2020 ES 202030313**

(43) Date of publication of application:
**22.02.2023 Bulletin 2023/08**

(73) Proprietors:
• **Universitat Jaume I**
**12071 Castellón De La Plana (ES)**
• **Universitat Politècnica de València**
**46022 Valencia (ES)**

(72) Inventors:
• **VIDAL ALBALATE, Ricardo**
**12071 Castellón (ES)**
• **BELENGUER BALAGUER, Enrique Francisco**
**12071 Castellon (ES)**
• **BLASCO GIMÉNEZ, Ramón Manuel**
**46022 Valencia (ES)**

(74) Representative: **Pons IP**
**Glorieta Rubén Darío 4**
**28010 Madrid (ES)**

(56) References cited:
**CN-A- 107 769 263    CN-B- 107 086 605**

• **ZHOU XIAO ET AL: "Start-up control of a HVDC grid based on MMC with integrating large-scale wind farms", 2017 19TH EUROPEAN CONFERENCE ON POWER ELECTRONICS AND APPLICATIONS (EPE'17 ECCE EUROPE), JOINTLY OWNED IEEE-PELS AND EPE ASSOCIATION, 11 September 2017 (2017-09-11), XP033250600, DOI: 10.23919/ EPE17ECCEEUROPE.2017.8099218**
• **CAI L ET AL: "Simulation of Startup Sequence of an Offshore Wind Farm With MMC-HVDC Grid Connection", IEEE TRANSACTIONS ON POWER DELIVERY, IEEE SERVICE CENTER, NEW YORK, NY, US, vol. 32, no. 2, 1 April 2017 (2017-04-01), pages 638 - 646, XP011643573, ISSN: 0885-8977, [retrieved on 20170322], DOI: 10.1109/ TPWRD.2016.2517184**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 138 250 B1

- RAMACHANDRAN R.; POULLAIN S.; BENCHAIB A.; BACHA S.; FRANCOIS B.: "On the Black Start of Offshore Wind Power Plants with Diode Rectifier based HVDC Transmission", 2019 21ST EUROPEAN CONFERENCE ON POWER ELECTRONICS AND APPLICATIONS (EPE &APOS;19 ECCE EUROPE), EPE ASSOCIATION, 3 September 2019 (2019-09-03), XP033665351, DOI: 10.23919/EPE.2019.8914779

**Description**

**OBJECT OF THE INVENTION**

The present invention is related to modular multilevel converters -MMC- and high voltage DC links -HVDC-, specifically to a method for powering up (precharging) the capacitors of the cells of the MMC converters and of the HVDC cables from the energy generated by an electric power plant, such as a wind farm.

**BACKGROUND OF THE INVENTION**

Year after year, the number of offshore wind farms that are connected to the ground electric power transmission network through DC -HVDC- links that use modular multilevel converters -MMC- for AC/DC (Alternating Current / Direct Current) conversion and DC/AC (Direct Current / Alternating Current) continues to increase.

The blackstart or autogenous start-up is the start-up process of an electric power plant without the support of an external power grid. To date, this essential service for the restoration of an electrical system in the event of a blackout has been provided only by conventional power plants (thermal or hydraulic power plants). However, with the increase in renewable power plants (wind, solar) and the decrease in conventional power plants, it is necessary for the former to also be able to restore the electrical system in the event of a blackout.

In order to start-up the converters, it is required that the capacitors of the cells that make them up are charged to their nominal voltage $V_c$ (usually in the range of 1.5 to 2 kV). Several methods have been proposed for the charging process of the capacitors, however, in all cases an external power source is required, generally the same ground electrical network. This prevents this type of plants from offering the blackstart service, i.e., the start-up without the support of an external electric power transmission network. The methods proposed in the state of the art for charging capacitors can be classified into three groups:

- Charging via auxiliary DC source. The auxiliary source, the voltage of which is equal to or less than the nominal voltage of the capacitors, is connected to the DC side of the converter and the cells are connected one by one in order to charge the capacitors.

- Charge from the DC side. In a first step (uncontrolled charge) the DC side of the converter is connected to the nominal voltage while the cells of the converter remain blocked (no IGBT or, in general, electronic switch of the cells is triggered). In this case, the use of precharging resistors is required to limit the currents.

This allows capacitors to be charged through antiparallel diodes to half their nominal voltage ($V_c$/2). In a second step (controlled charge), the number of connected (ON) cells is progressively reduced from 100% to 50%, and therefore the number of disconnected (OFF) cells is increased until the capacitors are charged to nominal voltage.

- Charge from the AC side. In a first step (uncontrolled charging), the MMC is connected on the AC side to the electrical network through precharging resistors that limit the charging current. All cells are blocked so the MMC acts as an uncontrolled rectifier. However, in a rectifier only two branches conduct simultaneously (one upper and one lower, corresponding to those phases in which the line voltage is higher at said instant). In the case of MMCs, at a given instant, the antiparallel diodes allow the capacitors of the branch cells that do not act as a rectifier to be charged.

In the second step (controlled charge) some PWM-based strategy is used (pulse-width modulation) which alternates the state of the cells between ON and OFF to increase the voltage to the nominal value, in a similar manner to the method of charging from the DC side, or the MMC is synchronised with the network and increases the voltage reference in the cells.

More specifically, the start-up method for offshore wind farms connected through MMC-HVDC links consists of the following steps:

1) powering up the ground MMC converter from the ground electrical network (charging of the capacitors of the cells and synchronisation with the AC network),
2) powering up the DC link from the ground electrical network through the ground MMC converter and control of the voltage thereof,
3) powering up the offshore MMC converter (charging of the capacitors) from the ground AC network through the DC link,
4) creating the offshore AC network of the wind farm and control of the voltage and frequency by means of the offshore MMC converter, and

5) synchronising the wind turbines with the offshore network and power generation.

According to the previous method, for a wind power plant to start supplying energy, it requires previously powering up the MMC converters and the DC link, using the ground electrical network therefor.

However, in the event of a blackout in the ground AC network, it is not possible to power up the MMC converters and the DC link, which prevents the wind farm from being connected to the ground electrical network.

This in turn aggravates the consequences of a blackout by reducing the number of plants that can restore an electricity system. Therefore, in order for this type of installation to offer the service of the electricity system, the modification of the start-up method is required. Likewise, the time that this type of plant would remain out of service would be reduced.

In the state of the art, the document titled *"Start-Up Control of an Offshore Integrated MMC Multi-Terminal HVDC System With reduced DC Voltage"* describes a creation for high voltage DC -HVDC- applications, including multi-terminal HVDC (MTDC) and renewable energy integration. This document, considering an MMC MTDC system integrated in a wind farm (OWF), investigates the start-up process thereof with three main creations:

1) it further develops the MTDC mathematical model with active networks and proposes a hierarchical start-up control scheme;

2) for the terminal that connects the OWF, it proposes a reduced DC voltage control scheme in order to mitigate surges with unlocking of the converter to zero voltage difference in sub-modules (SM) and proposes a general sequential start-up control scheme for the offshore-integrated MTDC system; and

3) analyses and compares different start-up control schemes. In order to evaluate the proposed sequential start-up control scheme, an offshore HVDC MMC system is established at the RTDS.

For its part, the document *"Study on Black-Start Scheme of MMC-HVDC System with a Large Scale Wind Farm"* discloses a study on the soft blackstart scheme for the MMC-HVDC system with a large-scale wind farm. For a two-terminal MMC-HVDC system, when a failure occurs on one side, the converter station on the other side will shut down. A three-step start-up strategy is given especially to carry out the blackstart, which gradually recovers DC voltage, including the uncontrollable and controllable charging process.

For a three-terminal HVDC system, when a blackout situation occurs, it would cause a DC voltage drop. To perform blackstart, a controller has been designed that makes the voltage from the AC side of the converter stable enough to restart the wind farm without affecting the other converters.

The document "Start-up control of a HVDC grid based on MMC with integrating large-scale wind farms" discloses a start-up control of an HVDC grid based on MMC with integrating large-scale wind farms, with active terminals and passive terminals. The methods and systems defined in this document describes the uncontrolled charging of the MMCs capacitors to a second voltage and the uncontrolled charging of the capacitors of the DC/AC to a third voltage. However, no steps regarding voltage reduction in the AC network or of synchronisation of the at least one AC/DC converter with the AC network is disclosed herein. Also, no steps regarding gradual increases in the AC voltage amplitude are included in this method.

Other publications of the state of the art, such as "Simulation of Startup Sequence of an Offshore Wind Farm With MMC-HVDC Grid Connection" proposes a startup sequence for a MMC HVDC-connected offshore wind farm. This document discloses a black-start sequence which involves the use of a diesel generator; during this sequence, the offshore MMC operates under ac and dc voltage controls and the onshore MMC operates under voltage magnitude control. This method includes steps regarding uncontrolled charging of both the AC grid and the Offshore start up generator, and also regarding controlled bringing the dc system voltage to its nominal level. However, it fails to disclose steps regarding of progressive increase in voltage in the AC network and synchronisation of the at least one AC/DC converter with the AC network.

Regarding patent applications, document EP2988404A1 relates to a method for accelerating the precharging of MMC, in particular to obtaining short total precharging times and moderate charging currents. To this end, it describes a method for charging an MMC with a plurality of converter cells, each of which includes a cell capacitor and two power semiconductor switches that are controlled or operated through an MMC controller, and comprises two steps.

A first step includes passive charging, from a main or auxiliary power supply connected to the MMC via a simple high-impedance passive precharging circuit, and without the MMC or dedicated external power semiconductor switches operating. A subsequent second step includes actively charging the cell capacitor from the same power source, operating the power semiconductor switches through the MMC controller, to a cell or capacitor nominal voltage above the minimum voltage.

Moreover, patent application CN107086605 discloses a black start method for zero start boosting of a power grid that can be used for ensuring the operation safety of the power grid and the safety of power equipment electrically connected with the power grid when a flexible high-voltage direct-current transmission unit with an MMC is used as a start source for black start of the power grid. The method herein describes a gradual increase from zero to the rated AC voltage according to a preset slope, but it is made in the context of the DC/AC converter connected to an external grid to be resurrected.

Furthermore, document EP2678932A2 describes a method for starting-up a multilevel converter. The multilevel converter is adapted for converting between an AC voltage and a DC voltage, and comprises an AC terminal and a DC terminal for connecting to an AC power supply or a DC power supply, respectively, which supplies the voltage to be converted. The multilevel converter comprises several converter cells connected in series, and each converter cell comprises a capacitor. The described method comprises the steps of supplying electric power from the AC power supply or DC power supply to the input of the converter, connecting a resistor in series with the converter cells, and connecting the capacitor of one or more converter cells in series with the resistor, wherein one or more capacitors connected in series with the resistor are charged from the connector through the resistor.

## DESCRIPTION OF THE INVENTION

The object of the present invention is a method for powering up a modular multilevel converter -MMC- and high voltage direct current -HVDC- link for power plants, which generates an AC network and supplies power to an external HVAC *(High Voltage Alternating Current)* supply network.

Both networks are connected through an HVDC link using MMC converter. Specifically the external HVAC supply network is connected to a DC/AC converter. The DC/AC converter is connected to an AC/DC converter through the DC link. At the other end of the AC/DC converter is the AC network and the power plant.

Moreover, each of the MMC converters, i.e., the AC/DC converter and the DC/AC converter, comprises a DC input and an AC output or vice versa, as appropriate. Furthermore, they are divided into one or more phases, each consisting of an upper branch and a lower branch, each of the branches comprising a series of cells. Each of the cells comprises electronic switches connected such that the charge and discharge of a capacitor located in each of the cells are controlled.

At the beginning of the method, the AC/DC and DC/AC converters are blocked, the cell capacitors are discharged, and the voltage of the DC cable and of the AC network of the power plant is zero.

The steps of the method proposed are:

- Step 1: creation of the AC network of the power plant by means of the wind turbines, for example, if it is a wind farm. Wind turbines, or generators in general, control the voltage and frequency such that they increase the voltage of the AC network progressively, preferably starting from an initial voltage of 0 p.u. (per unit), preferably up to an initial voltage of 0.35 p.u.

- Step 2: the AC/DC converter and the DC/AC converter are blocked (none of the electronic switches of the cells are triggered).

    ◦ The AC/DC converter behaves like an uncontrolled rectifier. In addition, each capacitor is charged up to approximately a second voltage of approximately 0.25 p.u. All capacitors of all branches of all phases are charged to the same voltage.
    ◦ At the same time the DC link is charged (preferably to approximately the second voltage of 0.25 p.u.)
    ◦ Preferably, the DC/AC converter capacitors are charged up to a third voltage of approximately 0.125 p.u.

- Step 3: next, the voltage of the AC network is reduced up to the second voltage (0.25 p.u. preferably) since there is not enough voltage in the DC link for the AC/DC converter to create the required voltage for the synchronisation thereof with the AC network when half-bridge cells are used. It is not required to reduce the voltage when full-bridge cells are used, since in this case the AC/DC converter is capable of creating AC voltages higher than the voltage on the DC side at the output.

- Step 4: synchronisation of the AC/DC converter with the AC network.

    ◦ The AC/DC converter is synchronised with the AC network and the charging of the capacitors of the AC/DC converter and the DC link continues in a controlled manner up to the nominal values thereof. The slope with which the voltage references are increased to limit the charging current is limited.
    ◦ Simultaneously, the voltage of the AC network is increased again to its nominal value.
    ◦ The capacitors in the DC/AC converter cells continue to charge in an uncontrolled manner as there is not yet enough voltage across the capacitors to trigger the transistors.

- Step 5: at the end of the previous step, the voltage of the capacitors of the DC/AC converter is half the nominal voltage. To increase its voltage to the nominal value, the cells are connected (ON) and disconnected (OFF) so that they go from initially working with a 100% duty cycle to a 50% duty cycle at the end of the charging period. The instant of connection and disconnection of the cells is not simultaneously carried out in all the cells but in a staggered manner in time to avoid creating a short circuit on the DC side of the DC/AC converter.

Once the complete system is powered up (AC network, AC/DC and DC/AC converter cell capacitors and DC links), the system is ready to proceed with the start-up of the DC/AC converter to contribute to the restoration of the external HVAC supply network if required.

The charging process of the capacitors when the AC/DC and DC/AC converters are blocked (step 2) is no controlled from the same converters. However, the charging current is controlled indirectly through the slope with which the voltage of the AC network is increased.

Therefore, unlike the methods mentioned in the background section of the invention in which it is necessary to insert precharging resistors to only limit (not control) the maximum current peak, with the proposed method there is control of the charging current throughout the process.

Similarly, in step 4 it is also possible to control the charging current by modifying the voltage reference of the AC network of the power plant, the DC link and the capacitors of the AC/DC converter. Likewise, in step 5, the charging current is controlled by adjusting the slope with which the voltage reference of the DC/AC converter capacitors is increased.

All voltage values and modulation factors indicated in the method are orientative, and the exact use of said values is not a requirement of the method. The energy needed to trigger the electronic switches (IGBTs, *Insulated Gate Bipolar Transistor,* IGCTs, *Integrated Gate-Committed thyristor,* MOSFET, *Metal-Oxide Semiconductor Field Effect Transistor,* BIGTs, *Bi-mode Insulated Gate Transistor,* or other types of electronic switches) of the cells is obtained from the same cell capacitors to facilitate the insulation of the power source.

For this reason it is necessary to charge the capacitors (step 2) up to approximately 25% of the nominal voltage thereof (this value may vary depending on the technical characteristics of the transistors used in the converter). From this instant it is already possible to control the triggering of the transistors, which allows the AC/DC converter to be synchronised with the AC network and proceed to the controlled charging (by means of the AC/DC converter) of the capacitors and the DC link (step 4).

However, if the power required to trigger the transistors is obtained from an auxiliary power source, it is possible to synchronise the AC/DC converter from the instant the AC network is created in step 1. This would simplify the charging process as steps 2 and 3 described above would not be required.

Without prejudice to the method described above for an HVDC link that uses MMC converters (DC/AC and AC/DC) in both converter stations, said method is used in other types of DC links, for example, those that use diode rectifiers in the AC/DC converter.

The method is applicable to any power plant (wind or any other type) that is connected to the AC network through a DC link that uses MMC converters in any of its converter stations or directly to DC networks.

The method is also valid for all types of cells that allow the charging of the capacitors when they are blocked. It is also possible to apply the same method to any cell topology if electronic switches are used that allow the cells to be controlled even when the voltage on the cell capacitors is zero.

Optionally, and to facilitate the execution of the different steps of the method, these are executed using a control system comprising a processor and a memory, configured to store a management software, so that when executed by the processor, it performs the steps required for powering up the MMC converters and the DC links.

The control system is preferably a centralised system, which communicates with all controlled elements such as MMC converters and generators. Alternatively, the control system is of a distributed nature among the different control elements.

For all of the above, unlike other methods used or proposed to date, the method of the present invention allows:

- powering up the MMC converters and the DC link, using only the power provided by the same electric power plant, i.e., without the need for an external power source (*blackstart*),
- restoring the electrical network (AC or DC) by means of a power plant in general or a wind farm in particular,
- charging the capacitors of the MMC converters without auxiliary equipment (rectifiers, thyristors, auxiliary DC sources, precharging resistors, diesel generators, etc.)
- controlling the charging currents at all times without the need for precharging resistors,
- charging the capacitors of the MMC converters and the DC to constant current link with the controlled capacitor voltages, and
- in the event that the power plant is a wind farm, using the network-generating turbines (*grid-forming*) as harmonic filters.

## DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:

Figure 1A shows the diagram of a wind farm connected through a HVDC high-voltage DC -HVDC- link.

Figure 1B shows a diagram with several wind farms connected through HVDC links to the network, wherein the DC links are interconnected.

Figure 2 schematically shows the structure of an MMC converter, specifically a DC/AC converter.

Figure 3 shows two types of cells used in MMC converters.

Figure 4 shows the steps of the charging process of the capacitors and of the DC link.

Figure 5 shows the charging of the capacitors of the cells and of the DC link during steps 1 and 2.

Figure 6 shows the status of the cells and the possible directions of current flow.

Figure 7 shows the control of the charging current.

Figure 8 shows the charging of the cells of the AC/DC converter.

Figure 9 shows the charging of the MMC converters and of the DC link. Graph 1 represents the voltage of the offshore AC network. Graph 2 represents the frequency of the AC network. Graph 3 shows the pole-ground voltages of the DC link. Graph 4 represents the active and reactive current generated by the power plant. Graph 5 shows the active and reactive power generated by the power plant.

Figure 10 shows the voltages of the capacitors during charging. Graph 1 represents the voltages of the capacitors of an upper branch of the AC/DC converter. Graph 2 represents the voltage of the capacitors of a lower branch of the AC/DC converter. Graph 3 shows the voltage of the capacitors of an upper branch of the DC/AC converter. Graph 4 represents the voltage of the capacitors of a lower branch of the DC/AC converter.

Figure 11 shows the voltage and current in the power plant.

Figure 12 shows the charging of the MMC converters and of the DC link to constant current. Graph 1 represents the voltage of the offshore AC network. Graph 2 represents the frequency of the AC network. Graph 3 shows the pole-ground voltages of the DC link. Graph 4 shows the active current, reactive current and total current generated by the power plant. Figure 5 shows the active and reactive power generated by the power plant.

Figure 13 shows the voltages of the capacitors during charging at constant current. Graph 1 shows the voltage of the capacitors of an upper branch of the AC/DC converter. Graph 2 represents the voltage of the capacitors of a lower branch of the AC/DC converter. Graph 3 represents the voltage of the capacitors of an upper branch of the DC/AC converter. Graph 4 shows the voltage of the capacitors of a lower branch of the DC/AC converter.

## PREFERRED EMBODIMENT OF THE INVENTION

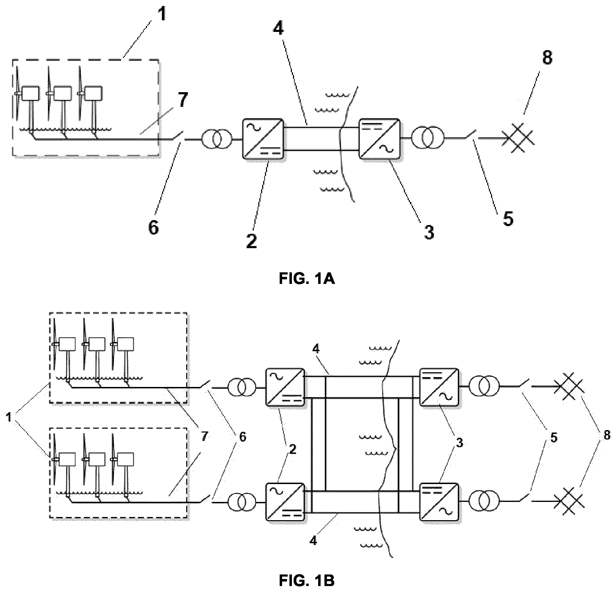

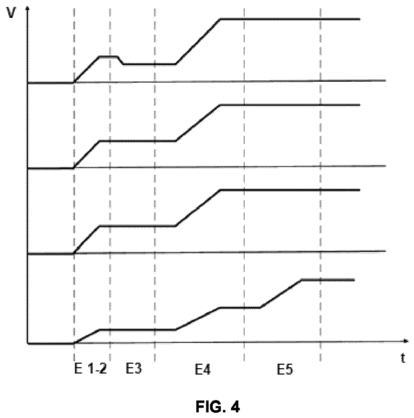

A preferred embodiment of the method of the present invention is described below, with the help of figures 1 to 13.
The method concerns the powering up the modular multilevel converter -MMC-converters and the high voltage direct current -HVDC- link in order to start-up an offshore wind farm (1) that generates an AC network (7) and that supplies energy to an external supply network (8) HVAC.
As shown in figure 1A, both networks are connected through a DC link (4) (*High Voltage Direct Current*) which uses MMC converters.
Specifically, the external HVAC supply network (8) is connected to a DC/AC converter (3), a first switch (5) being positioned between both. The DC/AC converter (3) is connected to an AC/DC converter (2) via the DC link (4). At the other end of the AC/DC converter (2) is the AC network (7) and the offshore wind farm (1). Between these and the AC/DC converter (2) a second switch (6) is located.

The method described below is applicable in the event that several power plants (1) associated with the corresponding AC/DC converters thereof are connected to the DC link (4), feeding several associated external networks (8) to the DC link (4) through the corresponding DC/AC converters (3) thereof.

In addition, as shown in figure 1B, the method is also applicable in the event that several DC links (4) are to be powered up that are interconnected with each other, for example in parallel, as represented in said figure, in an exemplary embodiment.

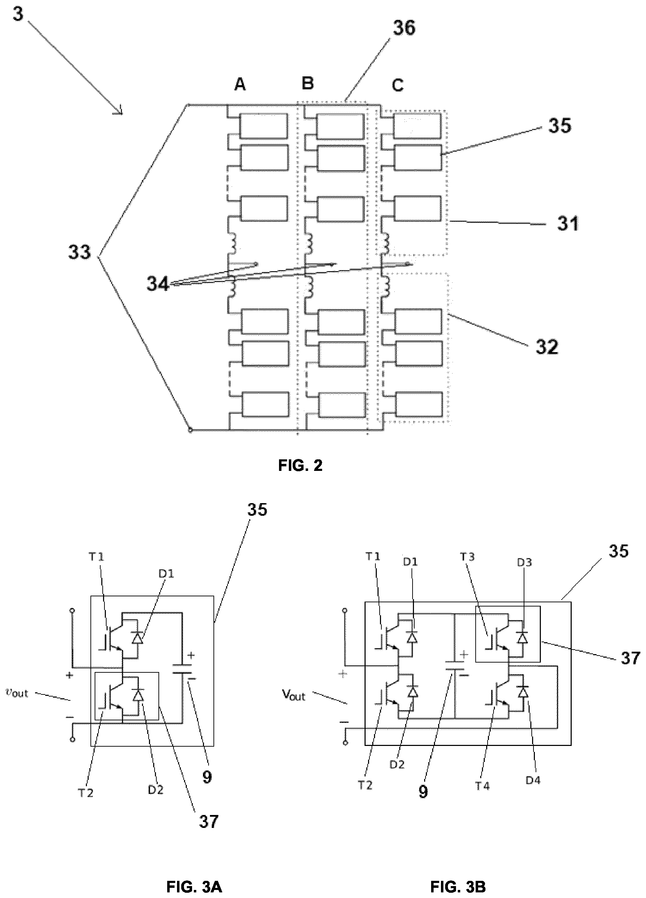

As shown in Figure 2, each of the MMC converters, i.e., the AC/DC converter (2) and the DC/AC converter (3) comprise a DC input (33) and an AC output (34) or vice versa, as appropriate. In addition, they consist of one or more phases (36) that are divided into an upper branch (31) and a lower branch (32), each of the branches comprising a series of cells (35). Specifically, figure 2 represents a DC/AC converter (3).

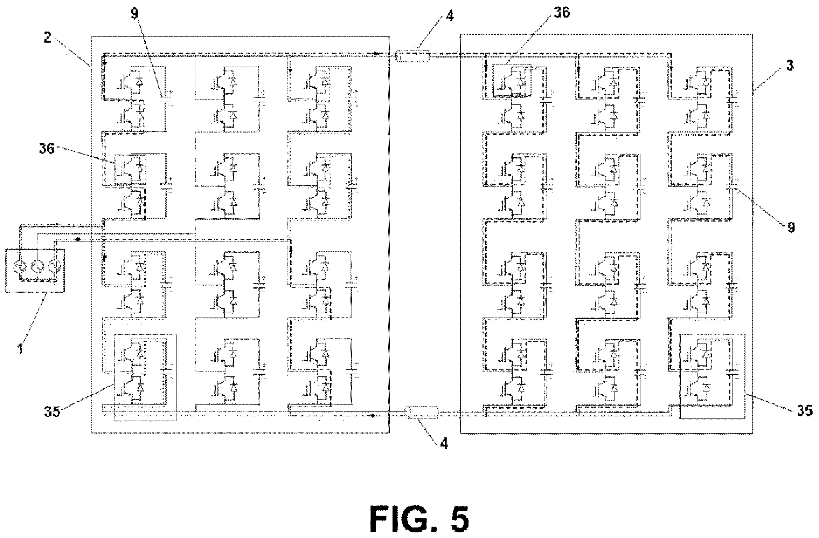

As can be seen in figure 3, each of the cells (35) comprises electronic switches (37) connected such that the charge and discharge of a capacitor (9) located in each of the cells (35) is controlled. Figure 5 shows the assembly of Figure 1A with a more detailed view of each of the cells (35).

At the beginning of the method, the AC/DC (2) and DC/AC (3) converters are blocked, the first switch (5) is open and the second switch (6) is closed, the capacitors (9) of the cells (35) are discharged and the voltage of the DC link (4) and of the AC network (7) of the offshore wind farm (1) is zero.

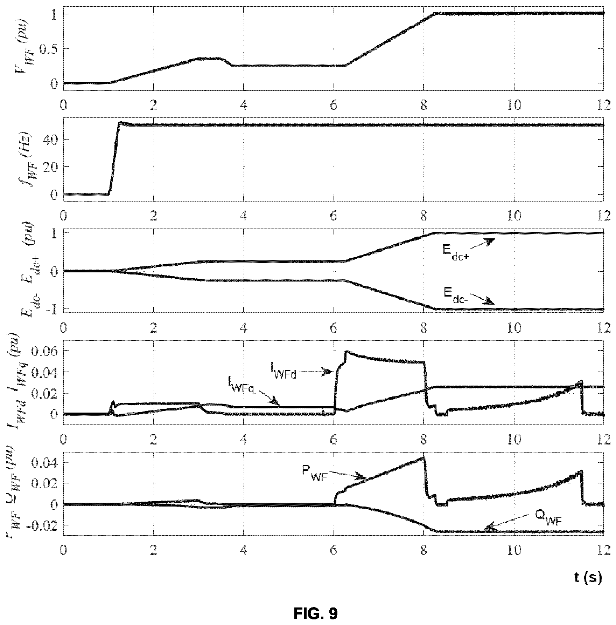

In a first step, the wind turbines of the offshore wind farm (1) create the offshore AC network (7) and control the voltage and frequency thereof. From a time t=1 s to a time t=3 s the voltage of the offshore AC network (7) is increased from an initial voltage of 0 p.u. up to a first voltage of 0.35 p.u., as shown in the first graph of figure 9. The frequency increases from 0 to 50 Hz in 0.1 seconds, as shown in the second graph in figure 9.

A second step consists of the uncontrolled charging of the capacitors (9) of the MMC converters, i.e., the AC/DC converter (2) and the DC/AC converter (3) and of the DC link (4).

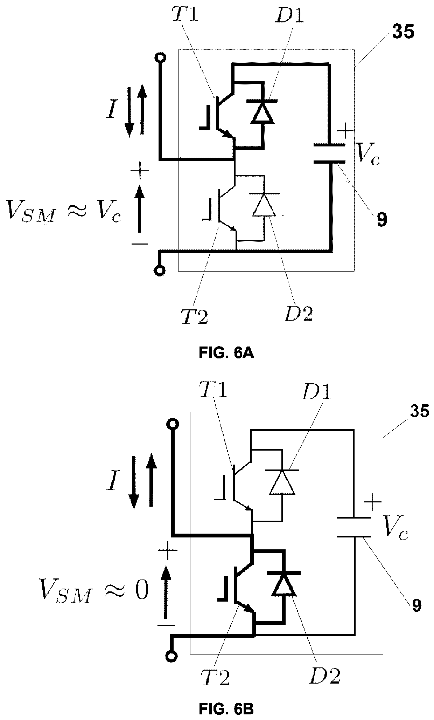

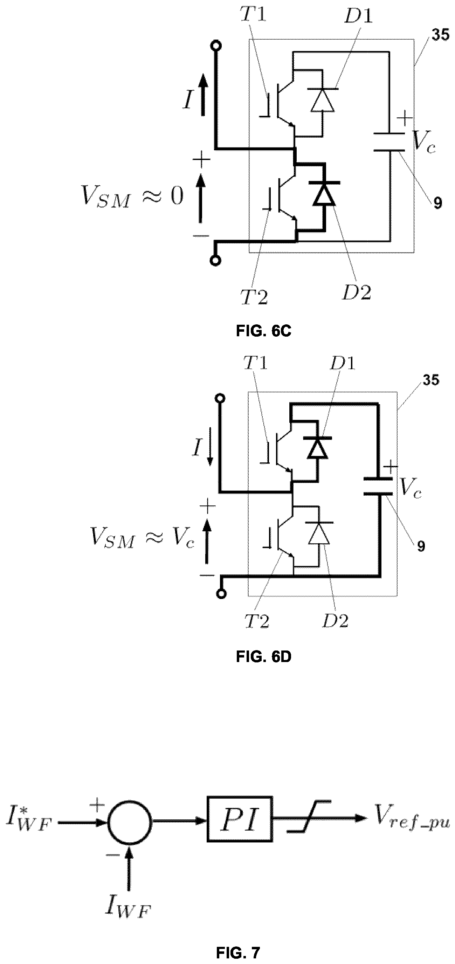

While the wind turbines of the offshore wind farm (1) create the offshore AC network (7) (step 1), the AC/DC converter (2) is blocked (none of the electronic switches (37) are triggered and due to the diodes D2 of the cells (35) (see figure 6c) the AC/DC converter (2) behaves as an uncontrolled rectifier (see the dashed line in the AC/DC converter (2) of figure 5 that indicates the path followed by the current at a given instant) that allows the charging of the DC link (4) (as shown in the third graph of figure 9) to a second voltage, which is given by:

$$V_{dc} = \frac{\sqrt{2}\ V_l}{2V_{dc\_nom}} = \frac{\sqrt{2} \cdot 0.35}{2 \cdot 1} = 0.25\ p.u.$$

Wherein $V_l$ is the effective value of the line voltage of the offshore AC network (7) in p.u., $V_{dcnom}$ is the nominal pole-ground voltage of the DC link (4) in p.u. and $V_{dc}$ is the pole-ground voltage in p.u. to which the DC link (4) is charged.

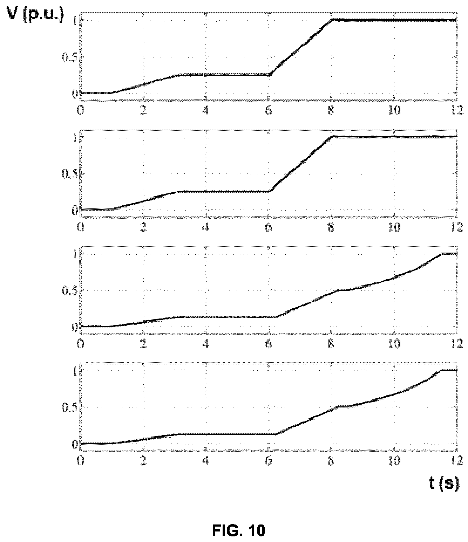

The diodes D1 of the cells (35) of those branches of the AC/DC converter (2) that are not conducting allow the charging of the capacitors (9), as shown in Figure 6d, to a second voltage, represented in the first and second graphs of figure 10:

$$V_{c\_mar} = \frac{\frac{\sqrt{2}\ V_l}{N}}{2 \cdot \frac{V_{dc\_nom}}{N}} = \frac{\sqrt{2} \cdot 0.35}{2 \cdot 1} = 0.25\ p.u.$$

wherein $\sqrt{2}\ V_l$ is the pole-pole voltage of the DC link (4), $\frac{\sqrt{2}\ V_l}{N}$ is the voltage of the capacitors (9) when the N cells (35) of a branch (31, 32) are simultaneously charged, and $2 \cdot \frac{V_{dc\_nom}}{N}$ the nominal voltage of the capacitors (9).

Figure 5 shows the charge of the capacitors (9) at a specific instant in which the capacitors (9) of the upper branch (31) of phase (36) C and the capacitors (9) of the lower branch (32) of phase (36) A are being charged. However, throughout one cycle of the mains voltage there is an alternation between the branches (31, 32) that conduct at each instant so that all the capacitors (9) of all the branches (31, 32) of all phases (36) are charged to the same voltage.

The ground DC/AC converter (3) is also blocked but the diodes D1 of the cells (35) allow the charging of the capacitors (9), as reflected in the third and fourth graphs of figure 10. The capacitors (9) are charged to a third voltage:

$$V_{c\_ter} = \frac{\frac{\sqrt{2}\, V_l}{2N}}{\frac{2\, V_{dc\_nom}}{N}} = \frac{\sqrt{2}\,.\,0.35}{4\,.\,1} = 0.125\, p.u.$$

Unlike the offshore AC/DC converter (2), in the ground DC/AC converter (3) the 2N cells (35) of the same phase (36) conduct simultaneously (that is, the diodes D1 of the upper branches (31) and of the lower branches (32)) conduct simultaneously so that the voltage of the capacitors (9) is half the voltage of the capacitors (9) of the offshore AC/DC converter (2).

Note that the term uncontrolled charging is used because the AC/DC (2) and DC/AC (3) converters are blocked and do not control the charging current. However, said current is indirectly controlled through the slope of the ramp used in the voltage reference of the offshore AC network (7), as indicated in the first graph of figure 9. Therefore, it is possible to control the charging current of the capacitors (9) and limit it to small values, as appears in the fourth graph of Figure 9, without using precharging resistors.

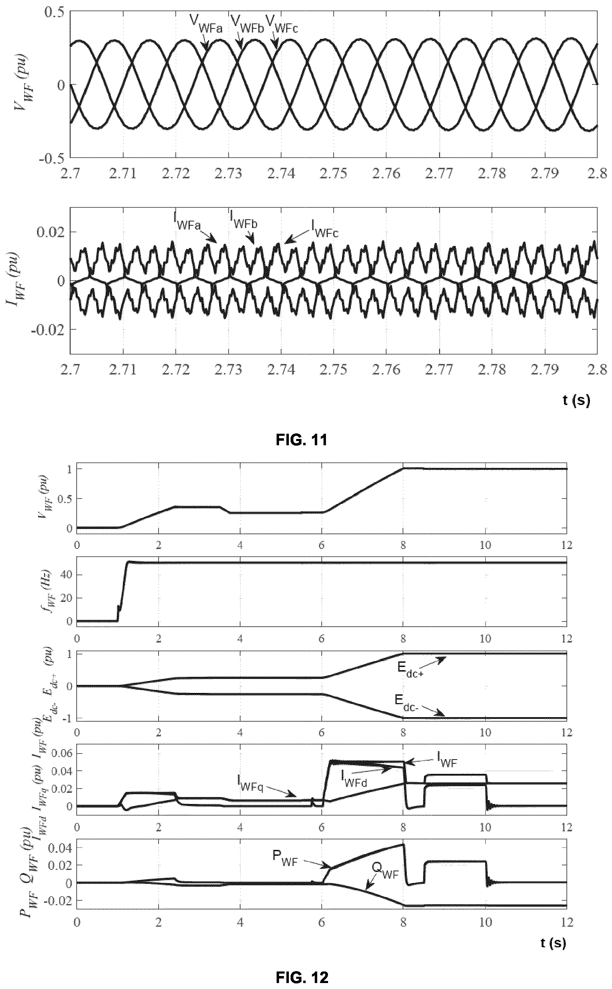

The offshore AC/DC converter (2) behaves like a six-pulse uncontrolled three-phase rectifier, therefore it generates harmonics in the current. However, the value of the current is so small (less than 0.02 p.u.) that its effect on the voltage of the offshore AC network (7) is negligible, as shown in figure 11.

In a third step, the voltage of the offshore AC network (7) is reduced.

After completion of uncontrolled charging, the offshore AC/DC converter (2) stops conducting. However, there is already enough voltage in the capacitors (9) to be able to trigger the electronic switches (37) of the cells (35) and synchronise the AC/DC converter (2) with the offshore AC network (7). However, the maximum value of the line voltage generated by the AC/DC converter (2) is:

$$V_{ac} = \frac{\frac{\sqrt{3}\, V_{dc}}{\sqrt{2}}}{V_{l\_nom}} = \frac{\sqrt{3}\,.\,0.25}{\sqrt{2}\,.\,1} = 0.306\, p.u.$$

Since the existing line voltage in the offshore wind farm (1) (0.35 p.u.) is higher than the maximum that can be generated by the offshore AC/DC converter (2) (0.306 p.u.), it is necessary to reduce the voltage of the AC network (7) to allow synchronisation of the offshore AC/DC converter (2) without current peaks occurring at the time of connection. Between t=3.5 s and t=3.75 s, the voltage of the offshore AC network (7) is reduced to 0.25 p.u. (see first graph of figure 9).

A fourth step consists of the start-up of the offshore AC/DC converter (2), controlled charging of the capacitors (9) of the offshore AC/DC converter (2), controlled charging of the DC link (4) and uncontrolled charging of the capacitors (9) of the DC/AC converter (3).

At t=5.75 s, the AC/DC converter (2) is synchronised with the offshore AC network (7). Next, the voltage of the capacitors (9) of the offshore AC/DC converter (2) is linearly increased from 0.25 p.u. to 1 p.u. between t = 6 s and t = 8 s (see first and second graph of figure 10). At the same time, between t = 6.25 s and t = 8.25 s, the voltage of the DC link (4) is increased from 0.25 p.u. up to 1 p.u. (see third graph of figure 9) and the voltage of the offshore AC network (7) from 0.25 p.u. up to 1 p.u. (see the first graph of figure 9).

**The** charging of the DC link (4), the charging of the capacitors (9) and the increase in the voltage of the offshore AC network (7) have been carried out at different time intervals to show that they are processes that can be independently controlled. However, they could be carried out simultaneously to reduce the total charging time.

During this step, the ground DC/AC converter (3) is still blocked, so the capacitors (9) thereof continue to charge in an uncontrolled manner up to the following voltage (see third and fourth graphs in figure 10):

$$V_{c\_ter} = \frac{\frac{2\, V_{dc\_nom}}{2N}}{\frac{2\, V_{dc\_nom}}{N}} = 0.5\, p.u$$

Again, the term uncontrolled charging is used because the ground DC/AC converter (3) is blocked and does not control the charging current. However, said current can be controlled indirectly by limiting the slope of the ramp with which the voltage of the DC link (3) is increased. Therefore, it is possible to control the charging current of the capacitors (9) and limit it to small values (see fourth graph of figure 9) without using precharging resistors.

At the end of this step, the capacitors (9) of the offshore AC/DC converter (2) are charged at the nominal voltage. The voltage of the offshore AC network (7) and the DC link (4) are also nominal. Instead, the capacitors (9) of the ground DC/AC converter (3) are charged to half the nominal voltage.

A fifth step consists of the controlled charging of the ground DC/AC converter (3).

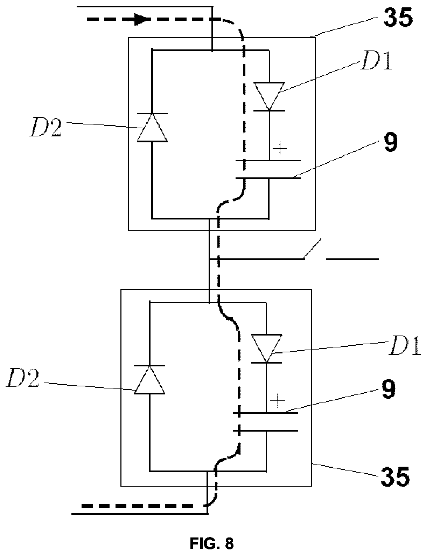

The equivalent circuit of the ground DC/AC converter (3) for one of the phases (36) of the converter is shown in figure 8.

The voltage in the capacitors (9) is 0.5 p.u. so there is already enough voltage to trigger the electronic switches (37). Initially, the six branches (31, 32) of the DC/AC converter (3) work with a modulation factor equal to 1, i.e., all the cells (35) are connected (they are ON). The voltage inserted in each phase (36) is equal to the voltage difference between the positive and negative poles of the cable, therefore, no current flows and the capacitors (9) are not charged.

Between t=8.5 s and t=11.5 s, the modulation factor of each of the branches (31, 32) is reduced from 1 to 0.5. When reducing said factor, the number of cells (35) that are connected to each branch (31, 32) is reduced (some cells (35) are disconnected, i.e., they are turned OFF).

This causes the voltage inserted in each phase (36) to be less than the voltage difference between the poles of the DC link (4) and a current circulates that charges the capacitors (9). Finally, with an algorithm for balancing the voltages of the capacitors (9), it is determined which cells (35) must be turned ON and OFF at each instant to guarantee that all the capacitors (9) are charged at nominal voltage (see the third and fourth graphs of figure 10).

All voltage values and modulation factors indicated in the method are orientative, and the exact use of said values is not a requirement of the method. Said values will depend on the minimum voltage required to trigger the electronic switches (37), which in this preferred embodiment are IGBTs, of the cells (35) and of the type of cell (35).

In the exemplary embodiment described above, predefined ramps have been used for the changes in the references of all the voltages. Using a sufficiently small slope it is possible to guarantee that the charging currents are small (see fourth graph of figure 9). However, the closed-loop charging current can be controlled using a control like that which is shown in Figure 7.

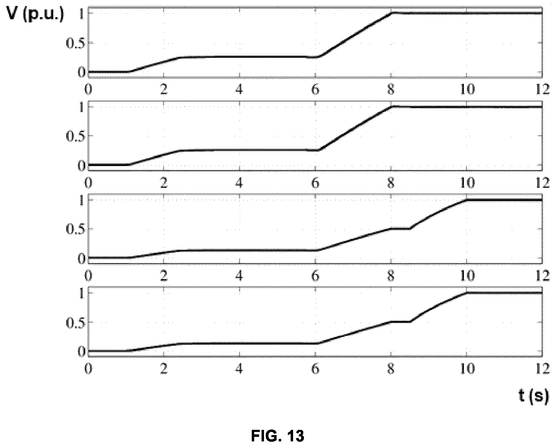

The results of the charging method shown above, but using closed-loop current control, are shown below. In the fourth graph of figure 12 it is verified that the total current delivered by the offshore wind farm (1) $(I_{WF})$ is constant and equal to 0.015 p.u., 0.05 p.u. and 0.035 p.u. at steps one, four and five respectively. Figure 13 shows the voltages of the capacitors (9) of the offshore AC/DC converter (2) and of the ground DC/AC converter (3).

According to the results shown, following the proposed method, it is possible to power up the capacitors (9) of the AC/DC (2) and DC/AC (3) converters and the DC link (4) using only the wind turbines of an offshore wind farm (1). Therefore, said method allows the offshore wind farms (1) that are connected through DC links (4) to offer the restoration service of an electrical network in the event of a blackout.

Unlike other existing methods, the use of an external energy source (another electrical network, diesel generator, etc.) or additional components (rectifiers, precharging resistors, etc.) is not required. In addition, it is possible to control the charging current during all the steps from the control of the voltages generated at each moment (unlike existing processes that use precharging resistors to only limit the current, but not control it).

## Claims

1.  A method for powering up modular multilevel converters -MMC- and an high voltage direct current -HVDC- link in order to start-up power plants (1) of an AC electrical network (7) that feeds at least one external supply network (8) through a DC link (4), the at least one external supply network (8) being connected to a DC link (4) through at least one DC/AC converter (3) and the power plant (1) connected to the DC link (4) through at least one AC/DC converter (2), and each of the converters (2, 3) comprising cells (35) each of them with at least one capacitor (9) connected to at least one electronic switch (37, the AC/DC converter (2) and DC/AC converter (3) initially being blocked, the capacitors (9) being discharged and the voltage of the DC link (4) and the AC network (7) being zero, wherein the DC link is an HVDC link and the AC/DC converter (2) and DC/AC converter (3) are MMC, the method being **characterised in that** it comprises the steps of:

    - a first step of progressive increase in voltage in the AC network (7) from an initial voltage to a first voltage,
    - a second step, simultaneous with the first step, of uncontrolled charging of each of the capacitors (9) of the at least one AC/DC converter (2) up to a second voltage expressed in p.u., charging of the DC link (4) up to the second voltage expressed in p.u., and charging of the capacitors (9) of the at least one DC/AC converter (3) up to a third voltage,
    - a third step, later to first step, of voltage reduction in the AC network (7) down to the second voltage, when the at least one AC/DC converter (2) does not generate sufficient voltage for synchronisation with the AC electrical network (7),
    - a fourth step, consecutive to third step, of synchronisation of the at least one AC/DC converter (2) with the AC network (7), controlled charging of the capacitors (9) of the at least one AC/DC converter (2) and of the DC link (4) up to their nominal voltages and uncontrolled charging of the capacitors of the at least one DC/AC converter (3),

- a fifth step, consecutive to fourth step, of controlled charging the capacitors (9) of the at least one DC/AC converter (3) up to the nominal voltage thereof, and
- a final step, consecutive to fifth step, of starting up the DC/AC converter (3) thereby restoring the at least one external supply network (8).

2. The method of claim 1, wherein the at least one AC/DC converter (2) is connected to one or more power plants (1).

3. The method of any of the preceding claims, wherein in the fifth step the charging of the capacitors (9) of the at least one DC/AC converter (3) up to the nominal voltage thereof is carried out by connecting and disconnecting the cells (35) so that they go from initially working with a 100% duty cycle to a 50% duty cycle, the cells (35) connecting and disconnecting in a staggered manner over time.

4. The method of any of the preceding claims, wherein in the fifth step the charging of the capacitors (9) of the at least one DC/AC converter (3) up to the nominal voltage thereof is carried out by activating the switches of the cells (35) one by one through a precharging resistor.

5. The method of any of the preceding claims, wherein the at least one DC/AC converter (3) comprises at least one phase (36) with an upper branch (31) and a lower branch (32) in which the cells (35) are arranged, wherein the cells (35) are arranged in series and wherein in the fifth step the charging of the capacitors (9) of at least one DC/AC converter (3) up to the nominal voltage thereof is carried out by simultaneously activating the switches of the cells (35) of the upper branch (31) or of the lower branch (32) of each phase (36) and by turning off the switches of the opposite branch cells (31, 32).

6. The method of any of the preceding claims, wherein in the second step the charging of the capacitors (9) of the at least one AC/DC converter (2) is controlled in a closed loop by varying the voltage of the alternate network (7) of the power plant (1).

7. The method of any of the preceding claims, wherein in the fourth step the charging of the capacitors (9) of the at least one AC/DC converter (2) is controlled in a closed loop which controls the charging current by varying the voltage of the DC link (4).

8. The method of any of the preceding claims, wherein in the fifth step the charging of the capacitors (9) of the DC/AC converter (3) is in a closed loop which controls the charging current ; and is controlled by varying the duty cycle of the cells (35).

9. The method of any of the preceding claims, wherein the power plant or plants (1) are wind farms.

**Patentansprüche**

1. Verfahren zum Hochfahren von modularen Multilevel-Konvertern -MMC- und einer Hochspannungs-Gleichstrom-Übertragung -HGÜ-, zum Anfahren von Kraftwerken (1) eines Wechselstromnetzes (7), das über einen DC-Link (4) mindestens ein externes Versorgungsnetz (8) speist, wobei das mindestens eine externe Versorgungsnetz (8) über mindestens einen DC/AC-Wandler (3) an einen DC-Link (4) angeschlossen ist und das Kraftwerk (1) über mindestens einen AC/DC-Wandler (2) an den DC-Link (4) angeschlossen ist, und jeder der Wandler (2, 3) Zellen (35) mit jeweils mindestens einem Kondensator (9) umfasst, der mit mindestens einem elektronischen Schalter (37) verbunden ist, wobei der AC/DC-Wandler (2) und der DC/AC-Wandler (3) zunächst gesperrt sind, die Kondensatoren (9) entladen sind und die Spannung des DC-Links (4) und des Wechselstromnetzes (7) Null beträgt, wobei der DC-Link eine HGÜ-Verbindung ist und der AC/DC-Wandler (2) und der DC/AC-Wandler (3) MMC sind, und das Verfahren **dadurch gekennzeichnet ist, dass** es die folgenden Schritte umfasst:

- einen ersten Schritt der progressiven Erhöhung der Spannung im Wechselstromnetz (7) von einer Anfangsspannung auf eine erste Spannung,
- einen zweiten Schritt, der gleichzeitig mit dem ersten Schritt stattfindet, der das ungesteuerte Laden jedes der Kondensatoren (9) des mindestens einen AC/DC-Wandlers (2) auf eine zweite in p.u. ausgedrückte Spannung, das Laden des DC-Links (4) bis auf die zweite in p.u. ausgedrückte Spannung und das Laden der Kondensatoren (9) des mindestens einen DC/AC-Wandlers (3) auf eine dritte Spannung umfasst,
- einen dritten Schritt, der sich an den ersten Schritt anschließt, in dem die Spannung im Wechselstromnetz (7) auf die zweite Spannung reduziert wird, wenn der mindestens eine AC/DC-Wandler (2) keine ausreichende Spannung für die Synchronisierung mit dem Wechselstromnetz (7) erzeugt,
- einen vierten Schritt, der auf den dritten Schritt folgt, der die Synchronisierung des mindestens einen AC/DC-Wandlers (2) mit dem Wechselstromnetz (7), das gesteuerte Laden der Kondensatoren (9) des mindestens einen AC/DC-Wandlers (2) und des DC-Links (4) auf ihre Nennspannungen und das ungesteuerte Laden der Kondensatoren des mindestens einen DC/AC-Wandlers (3) umfasst,
- einen fünften, der auf den vierten Schritt folgt, der das gesteuerte Laden der Kondensatoren (9) des mindestens einen DC/AC-Wandlers (3) auf deren Nennspannung umfasst, und
- einen letzten Schritt, der auf den fünften Schritt folgt, der das Anfahren des DC/AC-Wandlers (3) umfasst, wodurch das mindestens eine externe Versorgungsnetz (8) wiederhergestellt wird.

2. Verfahren nach Anspruch 1, wobei der mindestens eine AC/DC-Wandler (2) an ein oder mehrere Kraftwerke (1) angeschlossen ist.

3. Verfahren nach einem der vorhergehenden Ansprüche, wobei im fünften Schritt das Laden der Kondensatoren (9) des mindestens einen DC/AC-Wandlers (3) auf deren Nennspannung durch Zu- und Abschalten der Zellen (35) erfolgt, so dass sie von einem anfänglichen Arbeitszyklus von 100 % auf einen Arbeitszyklus von 50 % wechseln, wobei das Zu- und Abschalten der Zellen (35) zeitlich gestaffelt erfolgt.

4. Verfahren nach einem der vorhergehenden Ansprüche, wobei im fünften Schritt das Laden der Kondensatoren (9) des mindestens einen DC/AC-Wandlers (3) auf deren Nennspannung durch sukzessives Aktivieren der Schalter der Zellen (35) über einen Vorladewiderstand erfolgt.

5. Verfahren nach einem der vorhergehenden Ansprüche, wobei der mindestens eine DC/AC-Wandler (3) mindestens eine Phase (36) mit einem oberen Zweig (31) und einem unteren Zweig (32) umfasst, in denen die Zellen (35) angeordnet sind, wobei die Zellen (35) in Reihe geschaltet sind und wobei im fünften Schritt das Laden der Kondensatoren (9) des mindestens einen DC/AC-Wandlers (3) auf deren Nennspannung durch gleichzeitiges Aktivieren der Schalter der Zellen (35) des oberen Zweiges (31) oder des unteren Zweiges (32) jeder Phase (36) und durch Abschalten der Schalter der Zellen des gegenüberliegenden Zweigs (31, 32) erfolgt.

6. Verfahren nach einem der vorhergehenden Ansprüche, wobei im zweiten Schritt das Laden der Kondensatoren (9) des mindestens einen AC/DC-Wandlers (2) in einem geschlossenen Regelkreis durch Variation der Spannung des Wechselstromnetzes (7) des Kraftwerks (1) gesteuert wird.

7. Verfahren nach einem der vorhergehenden Ansprüche, wobei im vierten Schritt das Laden der Kondensatoren (9) des mindestens einen AC/DC-Wandlers (2) in einem geschlossenen Regelkreis gesteuert wird, der den Ladestrom durch Veränderung der Spannung des DC-Links (4) steuert.

8. Verfahren nach einem der vorhergehenden Ansprüche, wobei im fünften Schritt das Laden der Kondensatoren (9) des DC/AC-Wandlers (3) in einem geschlossenen Regelkreis erfolgt, die den Ladestrom steuert; und durch Variation des Tastverhältnisses der Zellen (35) gesteuert wird.

9. Verfahren nach einem der vorhergehenden Ansprüche, wobei es sich bei dem oder den Kraftwerken (1) um Windparks handelt.

## Revendications

1. Procédé de mise sous tension de convertisseurs modulaires multiniveaux (CMN) et d'une liaison à courant continu haute tension (CCHT) afin de démarrer des centrales électriques (1) d'un réseau électrique CA (7) qui approvisionne au moins un réseau d'alimentation externe (8) par l'intermédiaire d'une liaison CC (4), l'au moins un réseau d'alimentation externe (8) étant connecté à une liaison CC (4) par l'intermédiaire d'au moins un convertisseur CC/CA (3) et la centrale électrique (1) étant connectée à la liaison CC (4) par l'intermédiaire d'au moins un convertisseur CA/CC (2), et chacun des convertisseurs (2, 3) comprenant des cellules (35) chacune d'elles avec au moins un condensateur (9) connecté à au moins un commutateur électronique (37.), le convertisseur AC/DC (2) et le convertisseur DC/AC (3) étant initialement bloqués, les condensateurs (9) étant déchargés et la tension de la liaison CC (4) et du réseau CA (7) étant nulle, dans lequel la liaison CC est une liaison CCHT et le convertisseur CA/CC (2) et le convertisseur CC/CA (3) sont des CMN, le procédé étant **caractérisé en ce qu'**il comprend les étapes de :

- une première étape d'augmentation progressive de tension dans le réseau CA (7) d'une tension initiale à une première tension,
- une deuxième étape, en même temps que la première étape, de charge incontrôlée de chacun des condensateurs (9) de l'au moins un convertisseur AC/DC (2) jusqu'à une deuxième tension exprimée en p.u., de charge de la liaison CC (4) jusqu'à la deuxième tension exprimée en p.u., et de charge des condensateurs (9) de l'au moins un convertisseur CC/CA (3) jusqu'à une troisième tension,
- une troisième étape, ultérieure à la première étape, de réduction de tension dans le réseau CA (7) jusqu'à la deuxième tension, lorsque l'au moins un convertisseur CA/CC (2) ne génère pas une tension suffisante pour la synchronisation avec le réseau électrique CA (7),
- une quatrième étape, consécutive à la troisième étape, de synchronisation d'au moins un convertisseur CA/CC (2) avec le réseau CA (7), de charge contrôlée des condensateurs (9) d'au moins un convertisseur CA/CC (2) et de la liaison CC (4) jusqu'à leurs tensions nominales et de charge non contrôlée des condensateurs de l'au moins un convertisseur CC/CA (3),
- une cinquième étape, consécutive à la quatrième étape, de charge contrôlée des condensateurs (9) de l'au moins un convertisseur CC/CA (3) jusqu'à leur tension nominale, et
- une dernière étape, consécutive à la cinquième étape, de démarrage du convertisseur DC/AC (3) restaurant ainsi l'au moins un réseau d'alimentation externe (8).

2. Procédé selon la revendication 1, dans lequel l'au moins un convertisseur CA/CC (2) est connecté à une ou plusieurs centrales électriques (1).

3. Procédé selon l'une quelconque des revendications précédentes, dans lequel dans la cinquième étape la charge des condensateurs (9) de l'au moins un convertisseur CC/CA (3) jusqu'à leur tension nominale est effectuée en connectant et en déconnectant les cellules (35) de manière à ce qu'elles passent d'un cycle de fonctionnement initial de 100 % à un cycle de fonctionnement de 50 %, les cellules (35) se connectant et se déconnectant de manière échelonnée dans le temps.

4. Procédé selon l'une quelconque des revendications précédentes, dans lequel dans la cinquième étape la charge des condensateurs (9) de l'au moins un convertisseur CC/CA (3) jusqu'à sa tension nominale est effectuée en activant les commutateurs des cellules (35) un par un par l'intermédiaire d'une résistance de précharge.

5. Procédé selon l'une quelconque des revendications précédentes, dans lequel l'au moins un convertisseur DC/AC (3) comprend au moins une phase (36) avec une branche supérieure (31) et une branche inférieure (32) où les cellules (35) sont disposées, dans lequel les cellules (35) sont disposées en série et dans lequel dans la cinquième étape la charge des condensateurs (9) de l'au moins un convertisseur CC/CA (3) jusqu'à leur tension nominale est effectuée en activant simultanément les commutateurs des cellules (35) de la branche supérieure (31) ou de la branche inférieure (32) de chaque phase (36) et en éteignant les commutateurs des cellules de branche opposée (31, 32).

6. Procédé selon l'une quelconque des revendications précédentes, dans lequel dans la deuxième étape la charge des condensateurs (9) de l'au moins un convertisseur CA/CC (2) est contrôlée dans une boucle fermée en faisant varier la tension du réseau alternatif (7) de la centrale électrique (1).

7. Procédé selon l'une quelconque des revendications précédentes, dans lequel dans la quatrième étape la charge des condensateurs (9) de l'au moins un convertisseur CA/CC (2) est contrôlée dans une boucle fermée qui contrôle le courant de charge en faisant varier la tension de la liaison CC (4).

8. Procédé selon l'une quelconque des revendications précédentes, dans lequel dans la cinquième étape, la charge des condensateurs (9) du convertisseur CC/CA (3) est dans une boucle fermée qui contrôle le courant de charge ; et est contrôlée en faisant varier le cycle de fonctionnement des cellules (35).

9. Procédé selon l'une quelconque des revendications précédentes, dans lequel la ou les centrales électriques (1) sont des parcs éoliens.

FIG. 1A

FIG. 1B

**FIG. 2**

**FIG. 3A**

**FIG. 3B**

**FIG. 4**

FIG. 5

EP 4 138 250 B1

FIG. 6A

FIG. 6B

**FIG. 6C**

**FIG. 6D**

**FIG. 7**

19

**FIG. 8**

**FIG. 9**

FIG. 10

**FIG. 11**

**FIG. 12**

**FIG. 13**

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2988404 A1
- CN 107086605
- EP 2678932 A2